# EUROPEAN PATENT APPLICATION

(11) **EP 3 540 658 A1**
(43) Date of publication of application: **18.09.2019**
(21) Application number: 17869147.3
(22) Date of filing: 28.07.2017
(51) Int. Cl.: G06Q 10/02

(54) **SECONDARY RESOURCE RESERVATION METHOD BASED ON INTELLIGENT REPEATED RESERVATION**

(30) Priority: 14.11.2016 CN 201611033413
(71) Applicant: NIO Nextev Limited, Central, Hong Kong (HK)
(72) Inventor: WU, Yicheng, Shanghai 201804 (CN)
(74) Representative: Vossius & Partner Patentanwälte Rechtsanwälte mbB
(86) International application number: PCT/CN2017/095063
(87) International publication number: WO 2018/086386

(57) **Abstract**

The present application relates to an approach for second-time resource reservation based on smart repetitive booking, which comprises: step 1, when an order is received, a first resource reservation is made in accordance with an information of the order, and an information of probability of a resource in a service area being successfully occupied; step 2, when an information of acknowledgement of a service object handover is received, a second resource reservation is made in accordance with the current time and the information of the order. When reserving a resource, the application may repetitively book the same resource based on the situation of the probability of the resource being occupied prior to each service, while making second-time reservation for the resource in the process of execution when confidence of the accuracy of reservation is high. With this mechanism for resource reservation, not only the accuracy of resource reservation may be improved, but the waste of resource reservation may be reduced as well.

## Description

### TECHNICAL FIELD

The present application relates to the field of resource scheduling, and more particularly, to an approach for second-time resource reservation based on smart repetitive booking.

### BACKGROUND

The issue of resource allocation scheduling may be encountered in various aspects of human society, which seems to be especially important, particularly when resources are limited and demands are high. A good approach for allocation scheduling will be able to make full use of resources.

In real life, due to a variety of reasons, there is often a wide variation between the initial allocated time of an order and the actual occupied time of a resource, and particularly when there is delay in the actual occupied time of the resource, it will cause the resource to stay in a booked status all the time, during which the resource is in an idle status, resulting in the failure of taking effective utilization of the resource, and indirectly causing a waste of resources.

For example, in a currently new emerging business model of valet charging, after a user has placed an order, a service staff assigned by the service provider will pick up the car at the appointed location, and then take the electric car to an assigned location for charging, the entire process of which is required to conform with the time setting of the user, and this will relate to the reservation of charging resources.

The reservation allocating mode in a regular status comprises the following steps: (1) according to the order information from the user, assigning a charging resource, which is idle during the period of charging time of the car corresponding to the order, to this order, and leaving the charging time of the corresponding charging resource unoccupied until the car arrives; (2) assigning a staff to pick up the car at a location appointed by the order, and drive to the assigned resource for charging.

In this reservation allocating mode, in order to guarantee the certainty and experience of customer service, generally, a resource reservation may be made in advance to ensure that there surely will be a charging resource available for use when the car arrives at the charging resource, however, due to the uncertainty of time spent on the road and especially in finding the car, it is hard to guarantee that the car is able to arrive punctually at the charging resource at the reserved time. In order to solve the problem of late or early arrival of the car, generally, a certain buffer will be pre-reserved for every service, for example, an extra time of 15 minutes is pre-reserved both prior to and posterior to the service. Although this approach may solve, to a certain extent, the problem of a car failing to arrive punctually at the charging resource, it also has obvious disadvantages.

Prior technical solutions mainly make a one-time reservation for a resource when a service request is initiated, and this resource will be consumed solely by that service until it is released. This type of approaches may not adjust the reservation flexibly based on the actual situation, which cause a huge waste of resources due to the resource being occupied solely by that service when there is incongruity between the reservation situation and the actual situation, and particularly in the case that the we increase the reservation time, such waste will be more severe.

### SUMMARY

In order to address the above problems in the prior art, i.e. in order to solve the problem of higher wasting rate of resources in the prior reservation mode, the present application provides an approach for second-time resource reservation based on smart repetitive booking, which improves the accuracy of resource reservation and reduces the waste of resources.

An approach for second-time resource reservation based on smart repetitive booking provided by the present application comprises the following steps:
Step 1, when an order is received, a first resource reservation is made in accordance with an information of the order, and an information of the probability of a resource in the service area being successfully occupied;
Step 2, when an information of acknowledgement of a service object handover is received, a second resource reservation is made in accordance with current time and the information of the order.

Preferably, after accomplishing the second resource reservation in step 2, the information of the second resource reservation is sent to a service terminal.

Preferably, said information of the probability of a resource being successfully occupied is the probability of each resource in the service area being successfully occupied during each period of service time;

Said period of service time is each of the periods of time ranging in sequence after a daily service time of said service area is divided;

Said probability of each resource being successfully occupied during each period of service time is: for the corresponding resource during the corresponding period of time, a summation of all probabilities that the assigned first resource reservation is consistent with the corresponding second resource reservation, or a probability of the second resource reservation;

P*ᵢ* is said probability that the first resource reservation is consistent with the corresponding second resource reservation, where P*ᵢ* < 1; said probability of the second resource reservation is 0 or 1, which is set to 1 when there is a second resource reservation, otherwise is set to 0.

Preferably, said first resource reservation is required to satisfy the following conditions:

For the resource assigned to the order, during the period of time required for executing the order, there will be no second resource reservation, or the summation of all probabilities that the assigned first resource reservation is consistent with the corresponding second resource reservation is less than a preset probability threshold.

Preferably, said first resource reservation, specifically comprises:
Step 11, matching the resource to the period of service time, in accordance with the information of the order;
Step 12, for the resources matched in Step 11, judging whether the probability P of the resource being successfully occupied during the corresponding period of service time is less than said preset probability threshold, if so, then executing step 13;
Step 13, assigning the order to a matched resource, and a matched period of service time to accomplish the first resource reservation.

Preferably, said second reservation, specifically comprises:
Step 21, when an information of acknowledgement of a service object handover is received, estimating a time of arrival at the corresponding resource of the first resource reservation, and judging whether an absolute value of the difference between the starting time of the corresponding period of time of the first resource reservation and the estimated time is less than a preset threshold, if so, then executing step 22, otherwise, executing step 23;
Step 22, judging whether the assigned resource and period of time corresponding to the first resource reservation of the order has been booked for a second reservation by other orders, if so, then executing step 24, otherwise, executing step 25;
Step 23, selecting the period of time corresponding to the time of arrival at the corresponding resource of the first-time resource reservation, which is estimated in step 21, and further selecting a resource unassigned during this period of time, determining a second resource reservation based upon the period of time and the resource selected in this step;
Step 24, selecting a resource unassigned during the period of time corresponding to the first resource reservation in the service area for a second resource reservation of the corresponding order;
Step 25, using the resource and the period of time assigned in the first resource reservation of the corresponding order for a second resource reservation.

Preferably, said probability threshold may be 0.8.

Preferably, the computational method for said probability that the first resource reservation is consistent with the corresponding second resource reservation is: P*ᵢ* = 1/*n*, wherein n is the number of times allowed for a first reservation of a resource.

Preferably, said service object is a car.

Preferably, the computational method for said probability that the first resource reservation is consistent with the second resource reservation is:
Step 131, calculating a probability distribution of time length required for finding a car, in accordance with the parking lot at which the corresponding car of the order is located, and the utilization rate of the corresponding parking lot.

Step 132, calculating a probability distribution P(*t*) of time that the corresponding car of this order arrives at and occupies the resource, in accordance with the probability distribution P(*t_{f}*) of time length required for finding a car, and calculating the probability *Pᵢ* that the first resource reservation is consistent with the second resource reservation based on the probability distribution P(*t*), i.e., calculating the corresponding probability of the time expected for the resource being occupied in the first reservation following in the range of a time interval with an error of T; wherein T is a preset time length error.

Preferably, said probability distribution of time length required for finding a car in step 131, the computational method for which is: adding a normal distribution of the time length model for finding a car in a parking lot to a normal distribution of the time delay model for finding a car;
Said time length model for finding a car in a parking lot, specifically, is a normal distributing probability model of the time length for finding a car, which is established in accordance with the classification of the scale of the parking lot.

Said time delay model for finding a car, specifically, is a normal distributing probability model of the time delay for finding a car, which is established when the utilization rate of the parking spaces in the parking lot is higher than a preset utilization rate threshold.

Preferably, said scale of the parking lot may be classified into 3 classes, in accordance with the number of parking spaces: the classes comprising a large scale parking lot, a medium scale parking lot and a small scale parking lot.

Preferably, the corresponding parking spaces of said large scale parking lot are more than 300; the interval corresponding to the corresponding parking spaces of said medium scale parking lot is [100, 300]; the interval corresponding to the corresponding parking spaces of said small scale parking lot is (0, 100).

Preferably, the utilization rate threshold set in said time delay model for finding a car may be 90%.

The approach provided by the application, when reserving a resource, may repetitively book the same resource based on the situation of the probability of the resource being occupied prior to each service, while making second-time reservation for the resource in the process of executing a service when confidence of the accuracy of reservation is high. With this mechanism for resource reservation, not only the accuracy of resource reservation may be improved, but the waste of resource reservation may be reduced as well.

### BRIEF DESCRIPTION OF DRAWINGS

Fig 1 is a schematic flowchart of a first resource reservation of the application;
Fig 2 is a schematic flowchart of a second resource reservation of the application;
Fig 3 is a schematic probability distribution diagram of the time that the corresponding car of the order arrives at and occupies the resource in the application.

### DESCRIPTION OF EMBODIMENTS

The preferred embodiments of the application are described in reference with the accompanying drawings below. It should be understood by those skilled in the art that these embodiments are merely used for explaining the technical principles of the application, rather than intending to limit the scope of protection of the application.

The followings are described with only particular embodiments in the field of electric cars as examples, so that the technical scheme of the application may be described more clearly, whereas the technical scheme of the application may further be applied to other fields, such as valet fueling, valet car washing, valet laundry, etc. The technical scheme of the application for resource allocation may be adopted, as long as it relates to handing over a service object (a direct object of action, such as cars, electric bicycles, clothes, etc.) at an appointed location of an order, and sending this service object to a specific resource for service (such as charging, fueling, laundry, etc.). Moreover, the term "valet charging" refers to a service, in which the valet helps user handle the recharging issue of their electric vehicle.

The travel time for valet charging may be divided into the following steps, by analyzing the procedure of valet charging service:
(1) a service personnel reaches a garage or a community where the customer's car is parked;
(2) the service personnel finds the user's car;
(3) the service personnel drives the car to the assigned charging resource.

In the three steps above, the time spent in the second step is the most uncertain one, and is also an major factor affecting the accuracy of reservation time. Therefore, in order to eliminate the influence of this step, the system backend may be informed when this step is accomplished, at this point, the system backend may calculate again the expected time for the service personnel driving to the charging resource, and rebook the service time of the resource based on this expected time. Because the accuracy of the expected time of the third step is high, after a second reservation, the accuracy rate of resource reservation is accordingly improved as well.

An approach for second-time resource reservation based on smart repetitive booking of the application, comprises:
Step 1, when an order is received, making a first resource reservation in accordance with the information of the order and the information of the probability of a resource in a service area being successfully occupied.

Said information of the probability of a resource being successfully occupied, which is represented by P, is the probability of each resource in the service area being successfully occupied during each period of service time; said period of service time is each of the periods of time ranging in sequence after a daily service time of said service area is divided; said probability P of each resource being successfully occupied during each period of service time is: for the corresponding resource during the corresponding period of time, a summation of all probabilities that the assigned first resource reservation is consistent with the corresponding second resource reservation, or a probability of the second resource reservation; P*ᵢ* is said probability that the first resource reservation is consistent with the corresponding second resource reservation, where P*ᵢ* < 1, wherein *i* is the sequence number of the order of which a first resource reservation is made to the corresponding resource during the corresponding period of time, wherein *i* being a natural number; said probability of the second resource reservation is 0 or 1, which is set to 1 when there is a second resource reservation, otherwise is set to 0.

The first resource reservation in this embodiment is required to satisfy the following conditions: for the resource assigned to the order, during the period of time required for executing the order, there will be no second resource reservation, or the summation of all probabilities that the assigned first resource reservation is consistent with the corresponding second resource reservation is less than a preset probability threshold. Said preset probability threshold may be set to 0.8, or to other value.

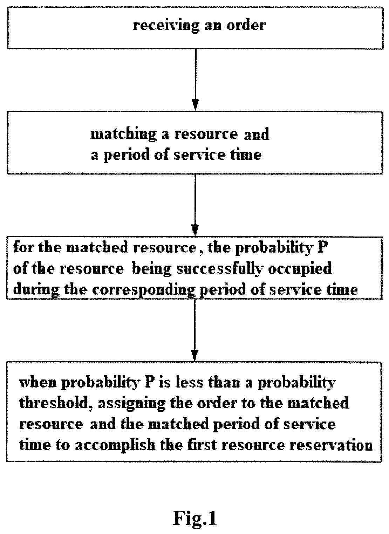

Particular steps of the first resource reservation in this embodiment are shown as Fig 1, which include:
Step 11, matching the resource to the period of service time, in accordance with the information of the order;
   In this step, the precondition for the establishment of an order is that there are resources available for reservation during the period of time corresponding to the reserved time, and the estimated time for getting the service object corresponding to the order and arriving at the resource is prior to the time reserved by the order.
Step 12, for the resources matched in Step 11, judging whether the probability P of the resource being successfully occupied during the corresponding period of service time is less than said preset probability threshold, if so, then executing step 13;
Step 13, assigning the order to a matched resource and a matched period of service time to accomplish the first resource reservation.

Step 2, when an information of acknowledgement of a service object handover is received, a second resource reservation is made in accordance with the current time and the information of the order.

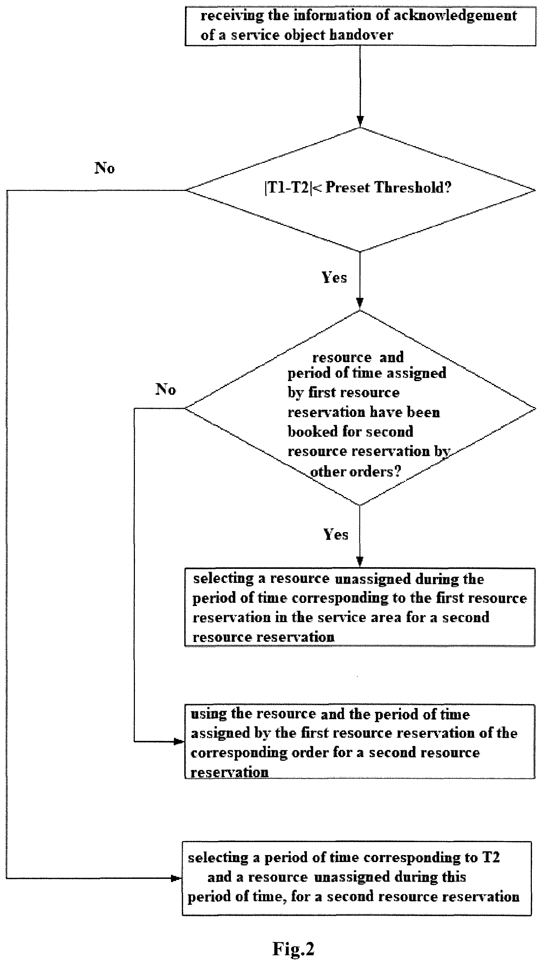

The particular steps of said second resource reservation in this embodiment are showed as Fig 2, which include:
Step 21, When an information of acknowledgement of a service object (an electric car) handover is received, re-estimating a time T2 of arrival at the corresponding resource of the first resource reservation, and judging whether an absolute value of the difference between the starting time T1 of the corresponding period of time of the first resource reservation and the estimated time T2 is less than a preset threshold, if so, then executing step 22, otherwise, executing step 23;
Step 22, judging whether the assigned resource and period of time corresponding to the first resource reservation of the order has been booked for a second reservation by other orders, if so, then executing step 24, otherwise, executing step 25;
Step 23, selecting the period of time corresponding to the time T2 of arrival at the corresponding resource of the first-time resource reservation, which is estimated in step 21, and further selecting a resource unassigned during this period of time, determining a second resource reservation based upon the period of time and the resource selected in this step;
Step 24, selecting a resource unassigned during the period of time corresponding to the first resource reservation in the service area for a second resource reservation of the corresponding order;
Step 25, using the resource and the period of time assigned in the first resource reservation of the corresponding order for a second resource reservation.

Step 3, sending the information of the second resource reservation to a service terminal; the service terminal of this embodiment is a handheld terminal of a service personnel, which is used by the service personnel for receiving information such as an information of resource reservation, etc., and for sending information such as a positional information, an information of acknowledgement of handover, etc.

The computational method of the application for the probability that the first resource reservation is consistent with the corresponding second resource reservation may be a strategy of fixed probability, and may further be a strategy of dynamic probability model, wherein the strategy of dynamic probability model is applied in this embodiment.

The strategy of fixed probability, i.e., the allowed number of repetitions *n* (*n* may be any value such as 2, 3, etc.) at the time of a first resource reservation is directly fixed based on the information of historical statistics or the operating experience. When the number of repetitions is less than n, we may allow other service to book this resource. Under this strategy, *Pᵢ* = 1/*n*, where n is the number of times allowed for a first reservation of a resource.

The strategy of dynamic probability model, i.e., dynamically calculating the probability that the first resource reservation is consistent with the corresponding second resource reservation for each order. A time length for finding a car and a time length for transporting the car is included in the information of the time length of the resource reservation, wherein the time length for finding a car is affected by relatively more factors, whereas the time length for transporting a car has a relatively higher accuracy, therefore, the probability distribution of the entire reserved time length may be derived, by calculating the probability distribution of the time length for finding a car, and adding to that of the corresponding time length for transporting a car. Hence, the strategy of dynamic probability model may specifically comprise following steps:
Step 131, calculating a probability distribution of the time length required for finding a car, in accordance with the parking lot at which the corresponding car of the order is located, and the utilization rate of the corresponding parking lot.

The computational method for the probability distribution of the time length required for finding a car is: adding a normal distribution of the time length model for finding a car in a parking lot to a normal distribution of the time delay model for finding a car.

The time length model for finding a car in a parking lot, specifically, is a normal distributing probability model of the time length for finding a car, which is established in accordance with the classification of the scale of the parking lot. The classification of the scale of the parking lot may be divided into 3 classes, in accordance with the number of parking spaces: a large scale parking lot, a medium scale parking lot and a small scale parking lot; the setting of intervals divided by said number may be calculated in accordance with the statistic time for finding a car of a large number of parking lots, for example, in this embodiment, the corresponding number of parking spaces of said a large scale parking lot is greater than 300; the interval corresponding to the corresponding number of parking spaces of a medium scale parking lot is [100, 300]; the interval corresponding to the corresponding number of parking spaces of a small scale parking lot is (0, 100). For different scale of parking lots, different time length models for finding a car in a parking lot are established with different expectation values and standard deviations.

The time delay model for finding a car, specifically, is a normal distributing probability model of the time delay for finding a car, which is established when the utilization rate of the parking spaces in the parking lot is higher than a preset utilization rate threshold. In this embodiment, the utilization rate threshold preset in said time delay model for finding a car may be 90%. The level of busyness of a parking lot may be reflected by the level of utilization rate, which is, for example, busy when the occupancy rate of parking spaces is higher than 90%, otherwise is not busy. When the parking lot is busy, the time delay will increase a certain amount for searching for the electric car required for service, and likewise, the situation of time delay is modeled according to a normal distribution.

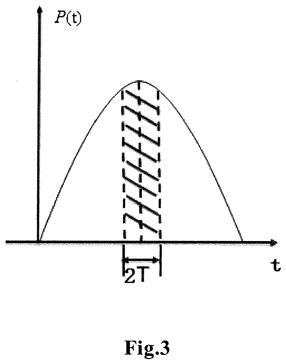

Step 132, calculating a probability distribution P(*t*) of time that the corresponding car of this order arrives at and occupies the resource, in accordance with the probability distribution P(*t_{f}*) of time length required for finding a car, and calculating the probability *Pᵢ* that the first resource reservation is consistent with the corresponding second resource reservation based on the probability distribution P(*t*), i.e., calculating the corresponding probability of the time expected for the resource being occupied in the first reservation following in the range of a time interval with an error of T, where T is a preset time length error. As showed in Fig 3, this figure is the probability distribution P(*t*) of time t that the corresponding car of this order arrives at and occupies the resource, wherein the middle one of three dotted lines of the dash area corresponds to the expected time for a resource being occupied at the time of a first resource reservation, and to which a time length of T is shifted prior and posterior, constructing a time interval of 2T, and the probability of the dashed area in the corresponding probability distribution P(*t*) of this time interval serves as the probability *Pᵢ,*

It should be realized by those skilled in the art that the steps of approaches of each example described in combination with the embodiments disclosed herein may be implemented with an electronic hardware, a computer software, or the combination thereof. In order to explain the interchangeability of electronic hardware and software, the composition and the steps of each example have been described generally according to functions in the description above. Whether these functions are executed in the way of electronic hardware or software, depends on particular applications and constraint conditions of design of the technical scheme. Those skilled in the art may use different methods to implement the described functions for each particular application, however, these implementations are not to be construed as departing from the scope of the application.

The term comprise or include or any other similar phraseologies intend to encompass nonexclusive inclusions, so as to render the processes, methods, items, or devices/apparatuses including a series of factors to not only comprise those factors, but also comprise other factors that are not explicitly cited, or also comprise the inherent factors of these processes, methods, items, or devices/apparatuses.

Hereto, the technical scheme of the present application has been described in combination with the preferred embodiments showed in the accompanying drawings, however, it should be readily understood by those skilled in the art that the scope of protection of the application is apparently not limited to these particular embodiments. Equivalent modifications or alternations may be made by those skilled in the art without departing from the principle of the application, and the technical scheme after these modifications or alternations will fall within the scope of protection of the application.

## Claims

1. An approach for second-time resource reservation based on smart repetitive booking, comprising the following steps:
step 1, when an order is received, a first resource reservation is made in accordance with an information of the order, and an information of probability of a resource in a service area being successfully occupied;
step 2, when an information of acknowledgement of a service object handover is received, a second resource reservation is made in accordance with current time and the information of the order.

2. The approach of claim 1, wherein after accomplishing the second resource reservation in step 2, the information of the second resource reservation is sent to a service terminal.

3. The approach of claim 2, wherein said information of probability of a resource being successfully occupied is the probability of each resource in the service area being successfully occupied during each period of service time;
said period of service time is each of the periods of time ranging in sequence after a daily service time of said service area is divided;
said probability of each resource being successfully occupied during each period of service time is: for the corresponding resource during the corresponding period of time, a summation of all probabilities that the assigned first resource reservation is consistent with the corresponding second resource reservation, or a probability of the second resource reservation;
P*ᵢ* is said probability that the first resource reservation is consistent with the corresponding second resource reservation, where P*ᵢ* < 1; said probability of the second resource reservation is 0 or 1, which is set to 1 when there is a second resource reservation, otherwise is set to 0.

4. The approach of claim 3, wherein said first resource reservation is required to satisfy the following conditions:
for the resource assigned to the order, during the period of time required for executing the order, there will be no second resource reservation, or the summation of all probabilities that the assigned first resource reservation is consistent with the corresponding second resource reservation is less than a preset probability threshold.

5. The approach of claim 4, wherein said first resource reservation specifically comprises:
step 11, matching the resource to the period of service time, in accordance with the information of the order;
step 12, for the resources matched in Step 11, judging whether the probability P of the resource being successfully occupied during the corresponding period of service time is less than said preset probability threshold, if so, then executing step 13;
step 13, assigning the order to a matched resource and a matched period of service time to accomplish the first resource reservation.

6. The approach of claim 5, wherein said second reservation specifically comprises:
step 21, when an information of acknowledgement of a service object handover is received, estimating a time of arrival at the corresponding resource of the first resource reservation, and judging whether an absolute value of the difference between the starting time of the corresponding period of time of the first resource reservation and the estimated time is less than a preset threshold, if so, then executing step 22, otherwise, executing step 23;
step 22, judging whether the assigned resource and period of time corresponding to the first resource reservation of the order has been booked for a second reservation by other orders, if so, then executing step 24, otherwise, executing step 25;
step 23, selecting the period of time corresponding to the time of arrival at the corresponding resource of the first-time resource reservation, which is estimated in step 21, and further selecting a resource unassigned during this period of time, determining a second resource reservation based upon the period of time and the resource selected in this step;
step 24, selecting a resource unassigned during the period of time corresponding to the first resource reservation in the service area for a second resource reservation of the corresponding order;
step 25, using the resource and the period of time assigned in the first resource reservation of the corresponding order for a second resource reservation.

7. The approach of claim 6, wherein said probability threshold may be 0.8.

8. The approach of any of claims 3∼7, wherein the computational method for said probability that the first resource reservation is consistent with the corresponding second resource reservation is:
*Pᵢ* = 1/*n*, wherein n is the number of times allowed for a first reservation of a resource.

9. The approach of any of claims 3∼7, wherein said service object is a car.

10. The approach of claim 9, wherein the computational method for said probability that the first resource reservation is consistent with the corresponding second resource reservation is:
step 131, calculating a probability distribution P(*t_{f}*) of time length required for finding a car, in accordance with the parking lot at which the corresponding car of the order is located, and the utilization rate of the corresponding parking lot;
step 132, calculating a probability distribution P(*t*) of time that the corresponding car of this order arrives at and occupies the resource, in accordance with the probability distribution P(*t_{f}*) of time length required for finding a car, and calculating the probability *Pᵢ* that the first resource reservation is consistent with the corresponding second resource reservation based on the probability distribution P(*t*), i.e., calculating the corresponding probability of the time expected for the resource being occupied in the first reservation following in the range of a time interval with an error of T; wherein T is a preset time length error.

11. The approach of claim 10, wherein said probability distribution of time length required for finding a car in step 131, the computational method for which is: adding a normal distribution of the time length model for finding a car in a parking lot to a normal distribution of the time delay model for finding a car;
said time length model for finding a car in a parking lot, specifically, is a normal distributing probability model of the time length for finding a car, which is established in accordance with the classification of the scale of the parking lot;
said time delay model for finding a car, specifically, is a normal distributing probability model of the time delay for finding a car, which is established when the utilization rate of the parking spaces in the parking lot is higher than a preset utilization rate threshold.

12. The approach of claim 11, wherein said scale of the parking lot may be classified into 3 classes, in accordance with the number of parking spaces: a large scale parking lot, a medium scale parking lot and a small scale parking lot.

13. The approach of claim 12, wherein the corresponding number of parking spaces of said large scale parking lot is more than 300; the interval corresponding to the corresponding number of parking spaces of said medium scale parking lot is [100, 300]; the interval corresponding to the corresponding number of parking spaces of said small scale parking lot is (0, 100).

14. The approach of claim 13, wherein the utilization rate threshold preset in said time delay model for finding a car may be 90%.
